Europäisches Patentamt

European Patent Office

Office européen des brevets

(11) Publication number: **0 317 539**
**A2**

## (12) EUROPEAN PATENT APPLICATION

(21) Application number: **88850392.7**

(22) Date of filing: **15.11.88**

(51) Int. Cl.⁴: **B 23 P 19/04**

(30) Priority: **17.11.87 SE 8704510**

(43) Date of publication of application:
**24.05.89 Bulletin 89/21**

(84) Designated Contracting States: **DE FR GB IT SE**

(71) Applicant: **Edenäs, Bernt**
**Byalagsgatan 10**
**S-725 91 Västeras (SE)**

**Helmersson, John-Olof**
**Villa Granbacken**
**S-731 90 Köping (SE)**

(72) Inventor: **Edenäs, Bernt**
**Byalagsgatan 10**
**S-725 91 Västeras (SE)**

**Helmersson, John-Olof**
**Villa Granbacken**
**S-731 90 Köping (SE)**

(74) Representative: **Hellborg, Torild et al**
**H. ALBIHNS PATENTBYRA AB P.O. Box 3137**
**S-103 62 Stockholm (SE)**

(54) **A method and apparatus for manufacturing a plurality of mutually similar objects.**

㊳ The invention relates to a method and to apparatus for manufacturing a plurality of mutually similar objects or assemblies, where each assembly comprises at least two mutually coacting elements of mutually different types or configurations and each having a respective critical dimension which is determinative of the function and/or the quality of the coaction between the elements. According to the invention, a manufacturing device (1) for manufacturing a first type of element of the mutually coacting elements is provided with a measuring device (3) for measuring the critical dimension of each individual first type of element. A manufacturing device (2) for manufacturing a second type of element of the mutually coacting elements is provided with a measuring device (4) for measuring the critical dimension of each individual second type of element. The measured values for each individual element of both types are stored in a data storage device (5) together with information concerning the identify of the element. An element assembling device (8) is connected to the data storage device (5), which on the basis of information stored therein controls the assembly device (8) in a manner to select and assemble those elements which will fulfil optimally a predetermined criterium with respect to the function and/or the quality of the coaction between the elements.

FIG. 2

Bundesdruckerei Berlin

EP 0 317 539 A2

## Description

### A method and apparatus for manufacturing a plurality of mutually similar objects

The present invention relates to a method and apparatus for manufacturing a plurality of mutually similar objects or assemblies, in which each assembly comprises at least two mutually coacting elements of mutually different configurations, each element having a critical dimension which is imperative in achieving satisfactory coaction between the elements and/or the desired quality of such coaction.

It has been usual practice in workshop industries which are engaged in the production of assemblies which comprise a multiple of mutually coacting elements, to manufacture the elements in different manufacturing locations and thereafter to bring together these separately produced elements for assembly to their final product form. In this respect, it is necessary for the aforesaid critical dimensions, imperative for achieving satisfactory function of and/or the desired quality of coaction between said elements in their subsequent assembly, to be maintained within predetermined tolerance limits. This enables one element of one configuration to be combined with any element of a series of such elements of different configuration and still obtain an assembly which will function satisfactorily and which has the quality desired. One proviso in this respect, however, is that the elements are manufactured to narrow tolerances with regard to their critical dimensions, which is expensive, since the machines used herefor must be operated with great accuracy and in accordance with expensive manufacturing processes.

The interest in the automatic assembly of multi-part objects has increased progressively in recent times. Problems arise, however, in respect of the mutually coacting elements of the assembly if these elements are not manufactured to tolerances of sufficiently narrow values. For example, the distribution of the clearance between the wall of a hole and an axle fitted therein may be excessive, which means that the functional performance and quality of the assembly will not be of the standard desired. Furthermore, in order to reduce the number of assemblies rejected, it is necessary to make the manufacturing tolerances even narrower, which adds further to the costs.

The object of the present invention is to provide a method and an apparatus for manufacturing a plurality of mutually similar objects or assemblies which will enable either the same satisfactory function of and/or quality of the coaction between respective elements in the assemblies to be achieved with the use of wider tolerances than is possible with known prior art methods and apparatus, or also to improve the mutual function and/or quality of coaction between said elements while applying the same tolerances as those applied in the aforesaid known methods and apparatus.

This object is achieved in accordance with the invention by means of a method and an apparatus having the characterizing features set forth in respective Claims 1 and 4.

The invention will now be described in more detail with reference to exemplifying embodiments thereof and with reference to the accompanying drawings, in which

Fig. 1 is a block schematic which illustrates the principle of the invention;

Fig. 2 is a schematic view of one embodiment of apparatus constructed in accordance with the invention;

Figs. 3 and 4 are diagrams which illustrate examples of distributions of the diametrical measurements of axles and bushes within a series;

Fig. 5 is a diagram which illustrates the clearances obtained when randomly assembling the axles and bushes according to Figs. 3 and 4;

Fig. 6 is a diagram which illustrates the clearances obtained when assembling the axles and bushes according to Figs. 3 and 4 while applying the invention;

Fig. 7 is a diagram which illustrates the clearances obtained when randomly assembling axles and bushes manufactured to tolerances which are narrower than those according to Figs. 3 and 4; and

Fig. 8 is a diagram which illustrates the clearances obtained when assembling axles and bushes manufactured to tolerances which are wider than those according to Figs. 3 and 4 when practising the invention.

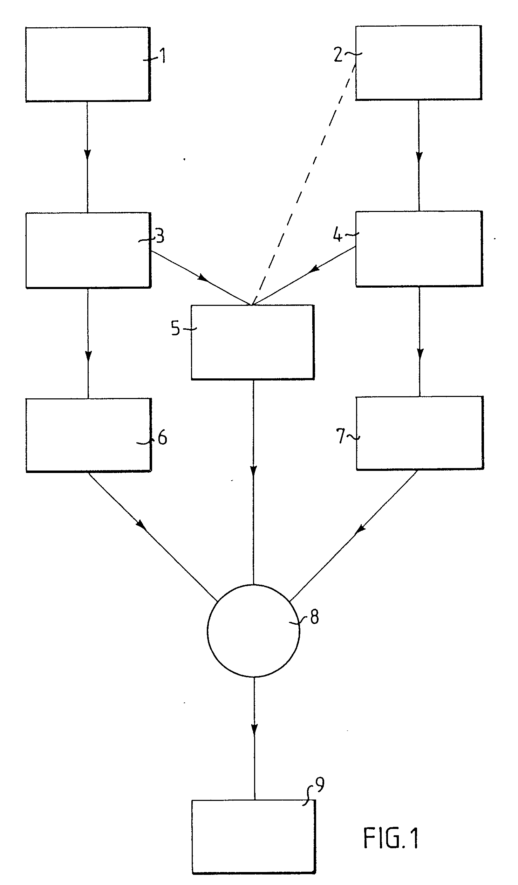

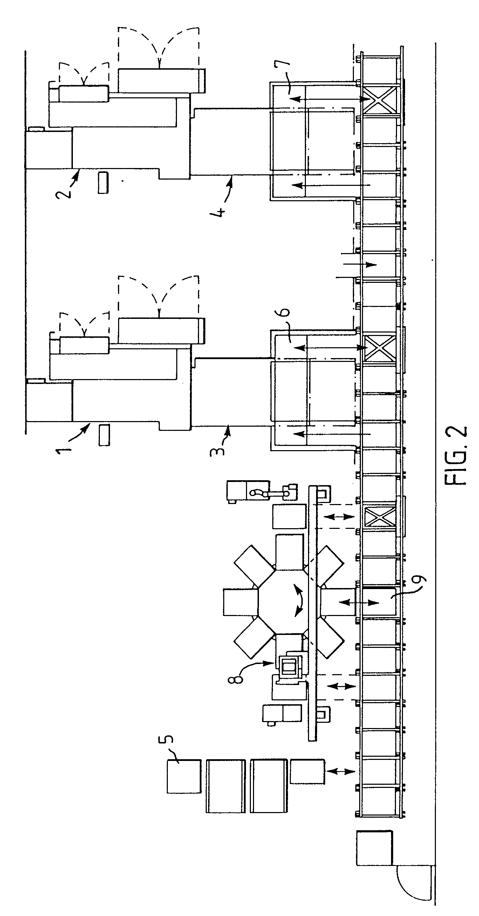

Fig. 1 is a block schematic which illustrates the mutual relationship between the various devices and mechanisms incorporated in an apparatus for manufacturing a plurality of mutually similar objects or assemblies in accordance with the invention, and Fig. 2 is a schematic view of the inventive apparatus and exemplifies how the apparatus can be set-up in practice. The inventive apparatus includes two manufacturing arrangements 1 and 2, which may have the form of machine tools, as illustrated in Fig. 2. For example, the tool 1 may be designed to manufacture axles, wherein the tool 2 can be designed to manufacture bushes which are intended to be assembled together with the axles produced by the tool 1. The axles and bushes produced in respective tools 1 and 2 constitute in this case examples of mutually co-acting elements of mutually different configurations each of which has a critical dimension which determines the satisfactory functioning of and/or quality of the coaction between said elements. Thus, in the present illustrated case the critical dimension concerned is the diameter of the axles and bushes, since it is this diameter which determines the clearance between axle and bush in their assembled state, this clearance being determinative of the correct functioning and quality of cooperation between axle and bush.

In accordance with the invention, a measuring device 3 and 4 is connected to a respective tool 1 and 2. In this respect, each measuring device 3 and 4 is intended to measure the critical dimension of each separate element manufactured in respective tools 1 and 2. Consequently, each element manufactured in tools 1 and 2 is transported therefrom to respective measuring devices 3 and 4. The measured values of the critical dimension of each separate element is sent from respective measuring devices 3 and 4 to a data store 5, preferably in the form of a computer. Information concerning the identity of said individual element is also sent to the data storage device 5 simultaneously with the measured value of the critical dimension of respective individual elements. This identifying information may, for instance be in the form of data concerning the exact position in which the element in question is to be placed in a material storage location 6 and 7 respectively, for instance, a loading pallet which has a number. of specific positions for individual elements.

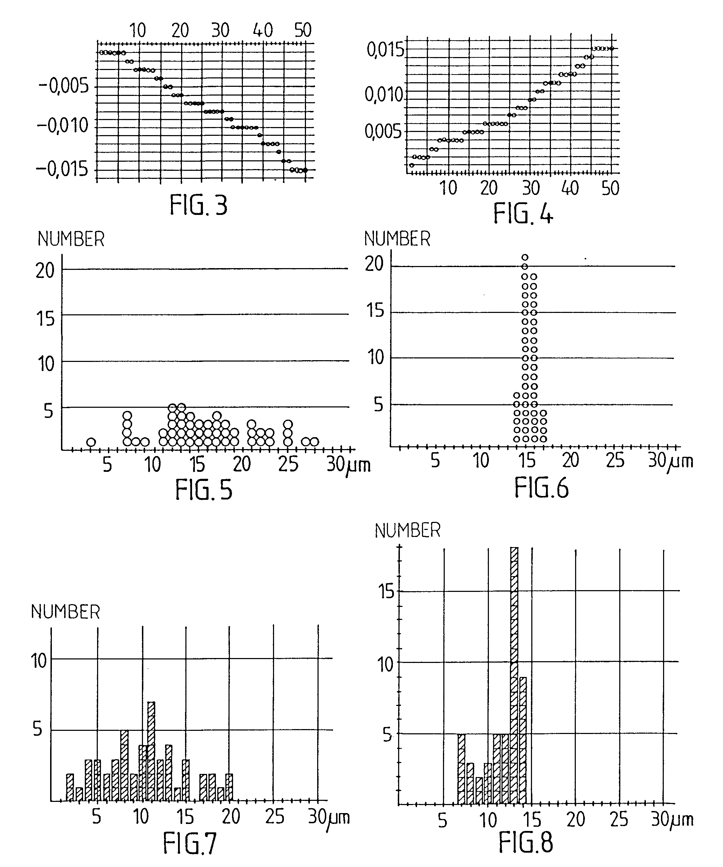

When all elements of said mutually different configurations or types have been produced in the tools 1 and 2 and measured in the measuring devices 3 and 4, the data storage device or computer 5 will contain information concerning the diameter measurements of all said elements. These measurements can therewith be distributed in the manner illustrated in Figs. 3 and 4, these figures relating to axles and bushes having a nominal diameter of 50 mm. If these axles and bushes are assembled in accordance with prior art methods, there will be obtained a clearance distribution between axles and bushes which may, for instance, have the appearance illustrated in the Fig. 5 diagram. This means that the clearance will vary between 3 and 28 $\mu$m. In the case of this example, however, the desired clearance is 15 $\mu$m, which has been found to give the best function. As will be seen from Fig. 5, only a few of the assemblies have this clearance or a clearance which lies close to this value.

It is also possible to first produce all elements of the first type or configuration in e.g. the machine tool 1 and measure the elements in e.g. the measuring device 3. When this has been made the data storage device or computer 5 will contain information concerning the diameter measurements of all said elements of the first type. This information makes it possible to calculate the distribution of the diameter of the elements and to use this distribution to control the work of e.g. the machine tool 2 in order to produce a series of elements of the second type or configuration that is adapted to said distribution. Then it will be possible to assemble the elements of the two types with a clearance distribution that will lie very close to the optimum value.

According to the invention, the elements are assembled with the aid of an assembling device 8, for instance, an industrial robot. The assembling device 8 is controlled by the data storage device or computer 5. On the basis of the information stored in the data storage device or computer 5 concerning the critical dimensions of the elements and the locations of respective individual elements in the material storage locations 6 and 7 respectively, the data storage device or computer 5 will send control signals to the element assembling device or industrial robot 8 instructing the device to take one element from the storage location 6 and one element from the storage location 7 and assemble said elements, the critical dimensions of these elements having values such that the assembly will have a clearance which corresponds as far as possible to the desired clearance. The assembly can then be placed in a futher storage location 9, for instance a loading pallet.

When producing assemblies from axles and bushes according to Figs. 3 and 4 and in accordance with the invention, there is obtained a clearance distribution throughout the assemblies according to the Fig. 6 diagram. Thus, very little variation is obtained in the clearances of the finished assemblies, the clearance in all assemblies lying between 14 and 17 $\mu$m. Comparison with the Fig. 5 diagram, according to which assembly has occurred randomly in accordance with prior art methods, will show that application of the principles of the invention will result in considerable improvement in the quality of the mutual coaction between the elements of the assembly, in the present case between axles and bushes. This improved quality will naturally mean fewer rejects and improved functional reliability and length of useful life of the finished assemblies.

The diagram of Fig. 7 illustrates the clearances obtained when randomly assembling, in a known manner, axles and bushes manufactured to finer tolerances than the axles and bushes according to Figs. 3 and 4. When the Fig. 7 diagram is compared with the Fig. 5 diagram it will be seen that the clearances obtained are spread over a smaller range, although this has been achieved solely with the aid of much more expensive and more complicated manufacturing procedures. Despite this, the results obtained are not as good as those obtained when applying the present invention, as will be evident from a comparison between the diagrams shown in Figs. 6 and 7.

Fig. 8 is a diagram which illustrates those clearances obtained when assembling axles and bushes in accordance with the concept of the present invention, these axles and bushes being manufactured to wider tolerances than the axles and bushes according to Figs. 3 and 4. As will be seen from the Fig. 8 diagram, the clearance distribution obtained lies within a relatively narrow range, which means that the assemblies will function satisfactorily and that fewer rejects are obtained. A comparison between the diagrams of Fig. 7 and Fig. 8 will show that the present invention provides a much better result with wider manufacturing tolerances than could be achieved with known techniques applying much finer manufacturing tolerances.

It will be understood that the invention is not restricted to the aforedescribed embodiment. The present invention affords many important advantages in the manufacture of assemblies or objects which comprise a large number of mutually coacting elements which have critical dimensions. For example, if mutually different types of elements are to be mounted on an axle while maintaining the combined axial extension of the elements within narrow tolerances, the invention can be applied in the following manner. Two elements of mutually different kinds or configurations are combined to form a first intermediate assembly, in accordance with the invention, whereafter two elements of another kind or another con figuration are combined together. in accordance with the invention, to form a second intermediate assembly, wherewith this procedure is continued until all different kinds of elements have been combined with another kind of element, or until only one kind of element remains. These intermediate assemblies are then combined pairwise in accordance with the invention, and optionally the intermediate assembly last produced is combined with the single remaining kind of element, therewith to form new intermediate assemblies. These intermediate assemblies are then combined in accordance with the invention, and the procedural sequence is repeated until the final assemblies have been produced.

**Claims**

1. A method for manufacturing a plurality of mutually similar objects or assemblies, in which each assembly comprises at least two mutually coacting elements of mutually different types, each having a critical dimension which determines the function and/or quality of the coaction between said elements, characterized by measuring the critical dimension of each individual element in conjunction with the manufacture of said elements; storing the measured value of each individual element together with data disclosing the identify of said elements; selecting for the production of each assembly an element of each separate type on the basis of the measured and stored values of the critical dimensions, said elements being selected to fulfil optimally a predetermined criterion concerning the function and/or quality of the coaction between the elements; and thereafter assembling the elements.

2. A method according to Claim 1, characterized by first producing all elements of a first element type in the manufacture of said elements, using the measured and stored distribution of the critical dimension of the elements of the first type to control a device used in the manufacture of the remaining elements; and by manufacturing said remaining elements with a critical dimension distribution which is adapted to the critical dimension distribution of the elements of said first type, therewith enabling the predetermined criterion to be optimally fulfilled.

3. A method according to Claim 1 or 2, characterized by storing the measured values and data concerning the iden tity of the elements in a computer, selecting the elements with the aid of said computer, and controlling at least one device for assembling said elements by means of said computer.

4. Apparatus for manufacturing a plurality of mutually similar objects or assemblies, in which each assembly comprises at least two mutually coacting elements of mutually different types, each having a critical dimension which is determinative of the function and/or quality of the coaction between said elements, characterized in that a device (1) for manufacturing a first type of the mutually coacting elements is provided with a measuring device (3) for measuring the critical dimension of each individual element, the measured value for each individual element being stored in a data storage device (5) together with information relating to the identity of said elements; in that a second manufacturing device (2) for manufacturing a second type of said mutually coacting elements is provided with a measuring device (4) for measuring the critical dimensions of each individual element, the measured value of each individual element being stored in said data storage device (5) together with information concerning the identity of said elements; and in that an assembling device (8) is connected with the data storage device (5); and in that the data storage device is constructed to control said assembling device (8) on the basis of information stored therein, in a manner to select and assemble those elements which will fulfil optimally a predetermined criterion with respect to the function and/or the quality of the coaction between said elements.

5. Apparatus according to Claim 4, characterized in that the data storage device is a computer (5); and in that the assembling device includes an industrial robot (8) controlled by said computer.

FIG.1

FIG. 2

EP 0 317 539 A2

EP 0 317 539 A2

FIG. 3

FIG. 4

FIG. 5

FIG.6

FIG.7

FIG.8